# EUROPEAN PATENT APPLICATION

(11) **EP 3 702 081 A1**
(43) Date of publication of application: **02.09.2020**
(21) Application number: 19160385.1
(22) Date of filing: 01.03.2019
(51) Int. Cl.: B23D 61/12

(54) **SAW BLADE FOR A RECIPROCATING SAW**

(71) Applicant: Voestalpine Precision Strip GmbH, 3333 Böhlerwerk (AT)
(72) Inventor: The designation of the inventor has not yet been filed
(74) Representative: Reitstötter Kinzebach

(57) **Abstract**

The invention concerns a blade (10) for a reciprocating saw comprising a flat body portion (11), a cutting edge portion (15) provided with a plurality of teeth (16) arranged at a first edge (14) of said flat body portion (11), a back edge portion (18) arranged at a second edge (17) of said flat body portion (11) opposite of said cutting edge portion (15), wherein said back edge portion (18) is provided with a micro-structured surface (19).

## Description

### BACKGROUND OF THE INVENTION

The present invention relates to saw blades and, more particularly, to a blade for a reciprocating saw.

Reciprocating saws are utilized to cut various types of materials, particularly metallic, wooden or plastic materials. Therefore, a reciprocating saw is a standard hand-held power tool found on most worksites. A reciprocating saw comprises a reciprocating drive member which includes a chuck or a clamp or any other suitable adapter that releasably engages one end of an exchangeable reciprocating saw blade.

The saw blade typically comprises a flat body portion which includes one or more attachments portions and a cutting edge portion which is provided with a plurality of teeth. The cutting edge portion is arranged at one edge of the flat body portion. The saw blade also has a back edge portion arranged at an opposite edge of the cutting edge portion. Conventional saw blades for a reciprocating saw are provided with a flat back edge portion.

The durability of the teeth of the cutting edge portion is limited and, owing to the harsh conditions, under which a reciprocating saw is typically used, the saw blade of such power tools must be replaced frequently.

In order to provide for a more versatile use of power tools, it has been suggested to allow not only standard saw blades to be attached to the drive member but also other types of attachments such as rasps, chisels or sanding paddles which are then operated in a reciprocating manner by the drive member as well. Typical examples of a power tool with changeable attachments are described in US patent application US 2008/0276470 A1. Still, the power tool described in this document requires frequent changes between saw blades and other types of attachments in accordance with the requirements at the worksite.

European patent application EP 3 323 542 A1 describes another suggestion to increase the versatility of a reciprocating saw blade. In this document, it has been suggested to provide one edge of the saw blade with a cutting edge portion provided with rough teeth and the opposite edge with a cutting edge portion having finer teeth. Depending on the specific requirements at the worksite, the user can mount the saw blade in a first orientation for use the first cutting edge and in a second orientation for using the second cutting edge. Changing the orientation of the saw blade requires disengaging and engaging the saw blade which is a risky endeavor because both edges of the flat body of the blade are provided with cutting teeth.

A similar saw blade having two cutting edges is described in US 2013/0174701 A1.

It is therefore one object of the present invention to provide a saw blade for a reciprocating saw which increases the safety of the user when handling the saw blade.

It is a further object of the present invention to increase the versatility of a reciprocating saw blade.

### SUMMARY OF THE INVENTION

In one embodiment, the invention provides a blade for a reciprocating saw comprising a flat body portion, a cutting edge portion provided with a plurality of teeth arranged at a first edge of the flat body portion, and a back edge portion arranged at a second edge of said flat body portion opposite of said cutting edge portion. According to the invention, the back edge portion is provided with a micro-structured surface.

The micro-structured surface of the back edge portion provides a safety feature because it allows the user to securely grip the saw blade when attaching it to the power tool or during replacement operation because the saw blade of the present invention provides a better grip than the flat back edge portion of conventional saw blades. The micro-structured surface of the back edge portion is not a teethed surface, thus reducing the risk of injury when handling the blade.

According to one embodiment of the invention, the micro-structured surface comprises structures having a height between 10 and 450 µm. The height of the surface structures is determined by the distance between a peak of the structure and an adjacent valley/bottom of the structure. While it is not excluded that the micro-structured surface might be provided with even smaller structures below the claimed range, smaller structures would not be functional in providing the desired effect. In another embodiment, the structures have a height between 50 and 400 µm and in a further embodiment, the structures have a height between 100 and 300 µm.

According to one embodiment of the invention, the micro-structured surface is an abrasive surface allowing the back edge portion of the blade to be used for deburring residual edge chipping or edge deformation in the material worked by the cutting edge of the saw blade. Accordingly, the saw blade of the present invention can act as a conventional reciprocating saw with its teethed cutting edge portion and as a rasp, file or chisel with its micro-structured back edge portion. This double function can be obtained without having to manipulate the blade within the power tool, i.e. no safety hazards are involved. Rather, when moving the power tool with the attached blade of the invention in one direction (e.g. downward), the cutting edge portion of the reciprocating blade will act as a saw on the workpiece in order to obtain a cut. Any undesired raised edges or small pieces of material which may remain at the cutting surface of the workpiece can be removed immediately after the initial cutting operation by moving the power tool with the saw blade of the present invention in the opposite direction (e.g. upward) allowing the reciprocating micro-structured back edge of the blade to act as deburring tool removing these residues and thus increasing the quality of the obtained cutting surface of workpiece.

Whether the micro-structured surface will act as an abrasive surface, will depend on both the material properties of the back edge portion of the blade and the material to be worked by the blade of the present invention. Usually, the body portion of reciprocating saw blades is made from a metal material which is flexible and elastic in order to allow the saw blade to bend during operation and to absorb and withstand the associated tensile stresses. These materials have only limited wear resistance so that a backing edge portion made from the same material as the body portion can only act as a deburring tool when workpieces made from softer materials are treated. It common practice to harden the cutting edge portion of a saw blade in order to increase the wear resistance of the saw teeth, the cutting edge portion of the blade is usually hardened. Similarly, in order to increase the abrasive characteristics of the back edge portion of the saw blade of the present invention, the micro-structured back edge portion can be hardened as well, e.g. by thermal treatment.

Since the requirements with regard to toughness and bending strength of the body portion of the saw blade on the one hand and wear resistance of the saw teeth of the cutting edge portion on the other hand can only be satisfied insufficiently by a single material, for example a metal or a metal alloy, saw blades are often made from so-called bimetallic bands or bimetallic sheets. Such bimetallic bands or sheets usually consist of a flat, sheet-like body portion of a base material which has the necessary toughness and flexible strength, for example of low-alloy steels or carbon steels. A wire or strip of a cutting edge material, which has a greater wear resistance than the base material, is welded onto a narrow edge of the sheet-like base. An edge wire of high-speed steel (HSS) is typically used as a suitable cutting edge material. Therefore, in one embodiment, the blade of the invention is made from a bimetallic sheet material, with said body portion comprising a low-alloy steel material or a carbon steel material and said cutting edge portion comprising high-speed steel material. In this embodiment, the back edge portion provided with the micro-structured surface is made from the same material as the flat body portion. Saw teeth are cut into the HSS cutting edge portion of the bimetallic sheet prior to a final hardening treatment. Similarly, the mirco-structures of the back edge surface will usually be formed prior to the final hardening treatment. The final hardening treatment required for the HSS portion will be preferably applied to the bimetallic sheet as a whole, thus hardening the back edge portion as well in order to increase the abrasive characteristics of the micro-structured surface.

In another embodiment, the invention provides for a reciprocating saw blade which is made from a trimetallic sheet material, with said flat body portion comprising a low-alloy steel material or a carbon steel material, said cutting edge portion comprising a high-speed steel material and said back edge portion comprising a tool steel material. Preferably, the tool steel material used for the back edge portion can also be a high-speed steel material. In this embodiment, a micro-structured back edge portion can be obtained which has a higher wear resistance compared to a back edge portion made from low-alloy steel or carbon steel. The trimetallic sheet material is a sheet having a low-alloy steel material / a carbon steel material at its center and high-speed steel material / tool steel material at its edges. The high-speed steel material used for the back edge portion can be the same high-speed steel material used for the cutting edge portion or a different alloy can be employed.

For the flat body portion, all carrier/backing materials commonly used for bimetallic or trimetallic saws can be employed. For example, usual low-alloy steels, which have great toughness and fatigue strength, may be used. Suitable sheet-like bases have for example a chemical composition in the range of 0.2 - 0.6% C, 0.1 - 1.0% Si, 0.3 - 2.0% Mn, 0.5 - 7.0% Cr, 0.1 - 2.6% Mo, up to 0.6% V and up to 5.0% W. Small additions of Nb and Ti in the range of up to 0.5% in total may be admixed for grain refinement. Iron and smelting-induced impurities form the remainder. Carbon steel with 0.50 to 1.50% C, up to 1.5% Si and up to 1.5% Mn may be used as the base material.

For the cutting edge and/or the back edge portions, all common HSS materials that are already used as wire for bimetal for saw blades or saw bands may for example be used, for instance S 2-10-1-8 (M42, 1.3247), S 6-5-2 (M2, 1. 3343), or S 1-5-1-8 (Mil, 1.3270).

In one embodiment, the micro-structured surface of the back edge portion is obtained by plastically deforming the surface using conventional metal-forming techniques such as rolling, embossing, indenting, die-forming or forging.

In another embodiment, the micro-structured surface is obtained by machining the surface of the back edge portion, for instance by using conventional mechanical cutting tools, laser cutting tools or water jet cutting tools.

In other embodiment, the micro-structured surface is obtained by adding material to the second edge of the flat body portion using an additive manufacturing technique, i.e. depositing material for forming the back edge portion onto said second edge. Typically, laser deposition techniques using a powder material composition can be employed.

In one embodiment, the micro-structured surface is obtained by partially embedding abrasive particles in said surface, for instance by partially melting the second edge of the flat body portion and directing a jet of abrasive particles to the melted section. A power comprising non-melting abrasive particles and melting metal particles, for instance made from the same material as the flat body portion, can also be employed. The abrasive particles can be selected from tool steel particles, ceramic particles, hard metal particles or combinations thereof. Metallic hard materials are borides, carbides, silicides and nitrides of high-melting transition metals, or else oxides in combination with workable microstructural constituents, i.e. a matrix in which the metallic materials are incorporated. Metallic hard materials include, for example, TiC, TaC, WC, TiB₂, MoSi₂, Al₂O₃, SiO₂), from which solid solutions (for example TiC-WC, Mo₂C-TiC), double carbides or complex carbides (for example Co₃W₃C, Ni₃W₃C) and intermetallic compounds can be derived. Furthermore, mixtures of HSS materials with metallic hard materials can also be considered for obtaining a micro-structured back edge surface. Average particle sizes of the abrasive particles range between 15 and 500 µm.

### BRIEF DESCRIPTION OF THE DRAWINGS

Figure 1 is a side view of a first exemplary embodiment of a saw blade for a reciprocating saw according to the invention.
Figure 2 is a side view of a second exemplary embodiment of a saw blade for a reciprocating saw according to the invention.
Figure 3a is an enlarged detail of the back edge portion of the saw blade of Figure 1.
Figure 3b is an enlarged detail of the back edge portion of the saw blade of Figure 2.
Figures 4a shows a cross-sectional view of body portion and back edge portion of a saw blade from which the saw blade of Figure 1 can be formed.
Figures 4b shows a cross-sectional view of body portion and back edge portion of an alternative embodiment of Figure 4a.
Figure 5a is a top view of the back edge portion of one embodiment of the invention.
Figure 5b is a depth profile of the back edge portion of Figure 5a.
Figure 6a is a top view of the back edge portion of another embodiment of the invention.
Figure 6b is a depth profile of the back edge portion of Figure 6a.

### DETAILLED DESCRIPTION OF THE DRAWINGS

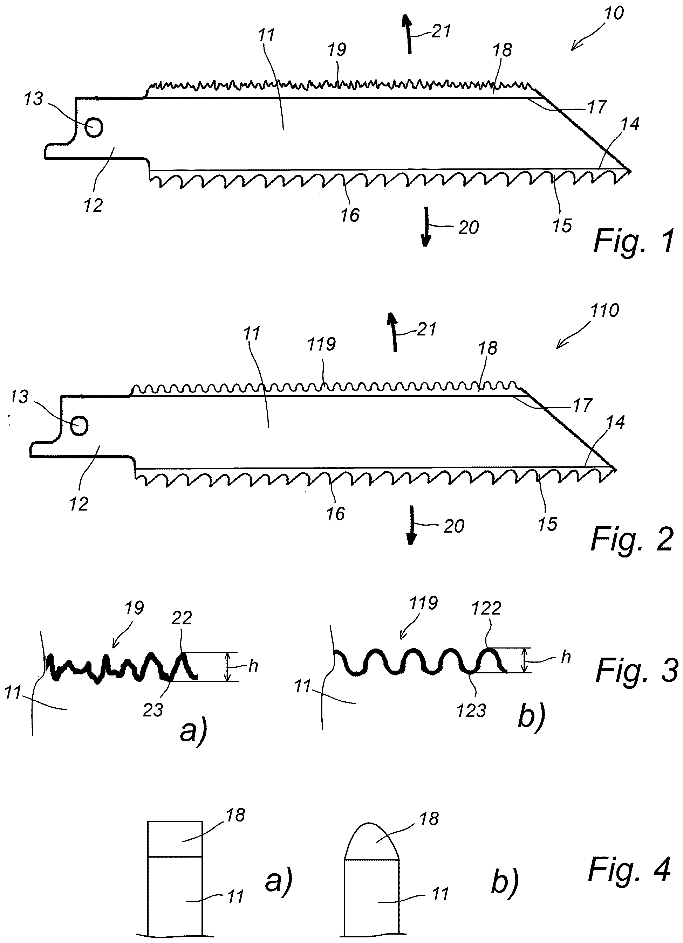

Figure 1 shows a first exemplary embodiment of a saw blade 10 for a reciprocating saw according to the invention. Saw blade 10 comprises a flat body portion 11 extending on one and into a tang 12 for attaching the saw blade to a power tool. Tang 12 is provided with a conventional locking aperture 13. The body portion 11 has a first edge 14 at which a cutting edge portion 15 provided with teeth 16 is arranged. In the depicted embodiment, the teeth 16 are completely arranged within the cutting edge portion 15. It is, however, possible to arrange teeth 16 in such a manner that their teeth bases extend into the flat body portion 11 allowing the teeth to benefit both from the more flexible material of the flat body portion 11 and, at the teeth tips, from the harder material of the cutting edge portion 15. At a second edge 17 of the flat body portion 11, located opposite of the cutting edge portion 15, a back edge portion 18 of the saw blade is arranged. The back edge portion 18 is provided with a micro-structured surface 19. The micro-structured surface 19 provides both increased grip when handling the saw blade 10 and can act as an abrasive surface. Accordingly, when operated in direction of arrow 20, the saw blade acts as a cutting tool via its cutting edge portion 15. When operated in direction of arrow 21, blade 11 acts as a deburring tool.

Figure 2 shows a second exemplary embodiment of a saw blade 110 of the present invention. Saw blade 110 essentially corresponds to saw blade 10 depicted in Figure 1 except that the micro-structured surface 119 of saw blade110 exhibits a more regular surface structure. Elements which correspond to elements already described in connection with the embodiment of Figure 1 are denoted by the same reference signs and will not be described in detail again.

Figures 3a and 3b are enlarged details of the back edge portion of the saw blade of Figures 1 and 2, respectively. As can be taken therefrom, the height h of the structures provided on the back edge portions 19, 119, respectively, are determined as the distance between peaks and adjacent valleys/bottoms of the structures. For instance, a height h in Figure 3a corresponds to the distance between peak 22 and valley/bottom 23 while height h in the embodiment of Figure 3b corresponds to the distance between peak 122 and valley/bottom 123. In the regular pattern of Figure 3b, the height distribution is quite narrow, while the irregular surface structure of the embodiment of Figure 3a exhibits a broader distribution of structure heights.

Figure 4 shows two alternatives of cross-sectional views of the back edge portion and the flat body portion (partly) of the blade before the micro-structures are applied to the back edge portion. Accordingly, as shown in Figure 4a, the back edge portion can have a rectangular profile. In another embodiment, as shown in Figure 4b, the back edge portion has a rounded profile.

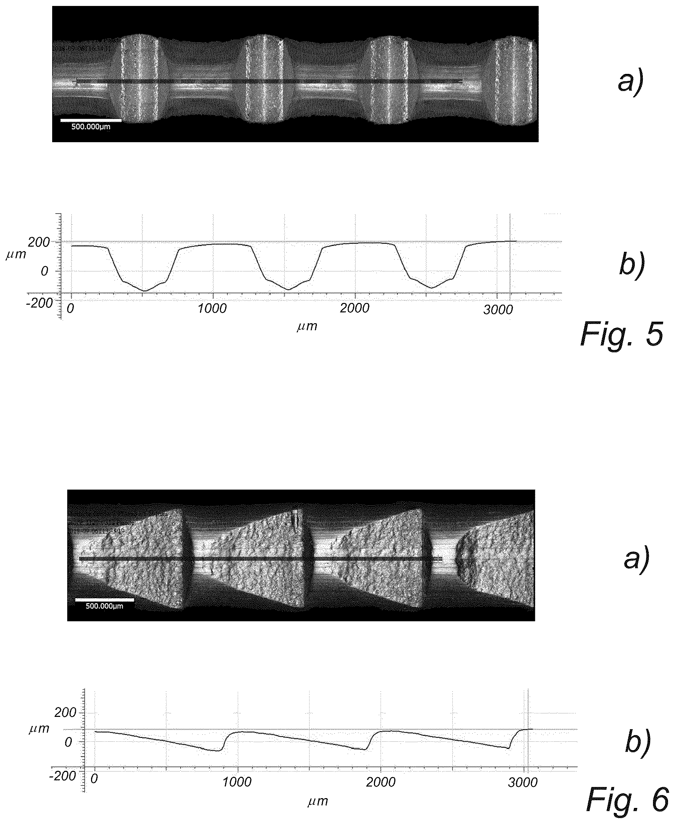

Figures 5 and 6 show exemplary embodiments of back edge portions of the blades according to the invention having a more regular micro-structured surface, i.e. similar to the embodiment of Figure 2.

Figure 5a is a microscopic photograph of a top view of the back edge portion of one embodiment of the invention where structures having a typical height of approximately 280 µm are obtained by a metal-forming process such as embossing.

A corresponding depth profile measured along the black center line of Figure 5a is depicted in Figure 5b.

An alternative surface structure, also obtained by embossing, and a corresponding depth profile is depicted in Figures 6a and 6b, respectively. As can be taken therefrom, the structures of the micro-structured surface have a typical height of approximately 130 µm. Again, the depth profile of Figure 6b is obtained along the black center line of Figure 6a.

## Claims

1. A blade for a reciprocating saw comprising
a flat body portion,
a cutting edge portion provided with a plurality of teeth arranged at a first edge of said flat body portion,
a back edge portion arranged at a second edge of said flat body portion opposite of said cutting edge portion, wherein said back edge portion is provided with a micro-structured surface.

2. The blade of claim 1, wherein said micro-structured surface comprises structures having a height between 10 and 450 µm.

3. The blade of claim 1, wherein said micro-structured surface comprises structures having a height between 50 and 400 µm.

4. The blade of claim 1, wherein said micro-structured surface comprises structures having a height between 100 and 300 µm.

5. The blade of claim 1, wherein said micro-structured surface is an abrasive surface for deburring.

6. The blade of claim 1, wherein said blade is made from a bimetallic sheet material, said flat body portion comprising a low-alloy steel material or a carbon steel material and said cutting edge portion comprising high-speed steel material.

7. The blade of claim 1, wherein said blade is made from a trimetallic sheet material, said flat body portion comprising a low-alloy steel material or a carbon steel material, said cutting edge portion comprising a high speed steel material and said back edge portion comprising a tool steel material, such as a a high speed steel material.

8. The blade of claim 1, wherein said micro-structured surface of said back edge portion is obtained by plastically deforming said surface using a metal forming technique.

9. The blade of claim 1, wherein said micro-structured surface of said back edge portion is obtained by machining said surface.

10. The blade of claim 1, wherein said micro-structured surface of said back edge portion is obtained by adding material to said second edge of said flat body portion using an additive manufacturing technique.

11. The blade of claim 10, wherein said micro-structured surface of said back edge portion is obtained by partially embedding abrasive particles in said surface.

12. The blade of claim 11, wherein said abrasive particles are selected from tool steel particles, ceramic particles, hard metal particles or combinations thereof.

13. The blade of claim 12, wherein said hard metal particles are made from tungsten carbide, titanium carbide, or tantalum carbide.

14. The blade of claim 12, wherein said abrasive particles have an average size comprised between 15 and 500 µm.
